Europäisches Patentamt

European Patent Office

Office européen des brevets

(11) Veröffentlichungsnummer: **0 315 271**
**A1**

# EUROPÄISCHE PATENTANMELDUNG

(21) Anmeldenummer: **88202438.3**

(22) Anmeldetag: **01.11.88**

(51) Int. Cl.4: **G01M 11/00**

(30) Priorität: **06.11.87 DE 3737635**

(43) Veröffentlichungstag der Anmeldung:
**10.05.89 Patentblatt 89/19**

(84) Benannte Vertragsstaaten:
**DE FR GB IT SE**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT SE**

(72) Erfinder: **Fuchs, Manfred, Dr.**
**Grosse Bahnstrasse 4**
**D-2000 Hamburg 54(DE)**
Erfinder: **Hoppe, Wolfgang**
**Mühlenweg 35**
**D-2000 Norderstedt 1(DE)**
Erfinder: **Beckmann, Friedrich-Karl**
**Flagentwiete 44**
**D-2080 Pinneberg(DE)**
Erfinder: **Brinkmeyer, Ernst, Prof.Dr.**
**Mittelstrasse 33**
**D-2110 Buchholz(DE)**
Erfinder: **Brenecke, Wolfgang**
**Roonstrasse 22**
**D-2000 Hamburg 20(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Optisches Heterodyn-Zeitbereichsreflektometer.**

(57) Die Erfindung betrifft ein optisches Heterodyn-Zeitbereichsreflektometer (OTDR) zur Bestimmung des Dämpfungsverhaltens eines Monomode-Lichtwellenleiters (Prüf-LWL) durch Messung der rückgestreuten Anteile von in diesen LWL gesendeten Lichtimpulsen, mit einem akustooptischen Modulator (AOM), durch welchen der Sendestrahl eines Lasers bei impulsweiser akustischer Erregung des AOM mit um die akustische Frequenz veränderter Lichtfrequenz in den zu messenden LWL abgelenkt wird, während der bei Nichterregung des AOM durch diesen dringende Laserstrahl als Lokaloszillatorstrahl (LO) dem aus dem Prüf-LWL zurückgestreuten Lichtimpulsen überlagert wird. Die optischen Systemverluste werden dadurch verringert, daß die Überlagerung in einem passiven Koppler, insbesondere einem Faserkoppler (10,26) erfolgt.

Fig.1

## Optisches Heterodyn-Zeitbereichsreflektometer

Die Erfindung bezieht sich auf ein optisches Heterodyn-Zeitbereichsreflektometer (OTDR) zur Bestimmung des Dämpfungsverhaltens eines Monomode-Lichtwellenleiters (Prüf-LWL) durch Messung der rückgestreuten Anteile von in diesen LWL gesendeten Lichtimpulsen, mit einem akustooptischen Modulator (AOM), durch welchen der Sendestrahl eines Lasers bei impulsweiser akustischer Erregung des AOM mit um die akustische Frequenz veränderter Lichtfrequenz in den zu messenden Prüf-LWL abgelenkt wird, während der bei Nichterregung des AOM durch diesen dringende Laserstrahl als Lokaloszillatorstrahl (LO) dem aus dem Prüf-LWL zurückgestreuten Lichtimpulsen überlagert wird.

Die Reichweite faseroptischer Meßsysteme zur Lokalisierung von Fehlstellen in Lichtwellenleitern (LWL) nach dem Prinzip des Zeitbereichsreflektometers (Optical Time Domain Reflectometer, OTDR) ist durch die zur Verfügung stehende Laserpulsleistung und die Empfängerempfindlichkeit begrenzt. Besonders im langwelligen Spektralbereich um 1300 nm, der wegen der geringen LWL-Dämpfung von ca. 0,5 dB/km zur Überbrückung großer Strecken dient, ist die Reichweite der Meßsysteme oft zu gering, da nur kleine Laserleistungen zur Verfügung stehen (einige mW im LWL) und nur sehr kleine Rückstreuintensitäten auftreten. Die Nachweisempfindlichkeit liegt bei einer Bandbreite von 1 MHz (1 μsec Pulsdauer = 100 m Ortsauflösung) bei ca. -73 dBm.

Die Detektorempfindlichkeit kann durch den Einsatz der Überlagerungstechnik erheblich gesteigert werden. Das limitierende Rauschen stammt nicht mehr vom Detektor, sondern vom nachzuweisenden Signal selbst, und liegt bei sonst gleichen Daten wie oben bei ca. -97dBm. Durch die Polarisationsabhängigkeit des Überlagerungsempfangs büßt man davon im Mittel 3 dB ein, so daß man als minimal zu detektierende Leistung etwa -94 dBm ansehen kann. Da bei Überlagerungsempfang das nachzuweisende Signal mit einem stabilen Lokaloszillator-Pegel (LO-Strahl) gemischt wird, muß bei diesem Verfahren ein kontinuierlich arbeitender Laser eingesetzt werden. Weiterhin muß seine Linienbreite deutlich unter der Nachweisbandbreite (1 MHz) liegen, um keine zusätzlichen Verluste zu erhalten. Beim Überlagerungsempfang nach dem Heterodyn-Verfahren, das weitere Vorteile im Rauschverhalten bietet, muß weiterhin ein konstanter Frequenzversatz zwischen Signal und LO-Strahl erzeugt werden. Beim Überlagerungsempfang benötigt man in der Detektorelektronik nur den halben Dynamikbereich im Vergleich zu einem Direktempfänger, da das Empfängersignal proportional der Amplitude und nicht der Leistung des optischen Rückstreusignals ist.

Zur weiteren Steigerung der Reichweite des Reflektometers und zur Glättung von Interferenz-(Fading-) Effekten können viele nacheinander gemessene Signalkurven gemittelt werden.

Eine Anordnung der eingangs genannten Art ist durch die DE-OS 35 06 884 bekannt. Dabei werden der LO-Strahl und die Rückstreusignale mittels eines weiteren AOM überlagert. Da verfügbare AOM jedoch eine beträchtliche Durchgangsdämpfung aufweisen und da zusätzlich trotz hohen Justieraufwands durch die erforderlichen Freistrahl-Anschlüsse des AOM beträchtliche Einkoppelverluste entstehen, läßt sich mit dem bekannten System kein Heterodyn-OTDR genügend hoher Reichweite realisieren.

Der systembedingt theoretisch mögliche Reichweitengewinn eines Heterodyn-OTDR wird durch hohe Dämpfungen der Einzelbausteine zunichte gemacht.

Der Erfindung liegt deshalb die Aufgabe zugrunde, die Systemverluste der Anordnung der eingangs genannten Art zu verringern.

Die Lösung gelingt dadurch, daß die Überlagerung in einem passiven Koppler, insbesondere einem Faserkoppler erfolgt.

Erfindungsgemäß wird auf einen zweiten AOM verzichtet. Der stattdessen eingesetzte passive Koppler hat zwar auch unvermeidliche Verluste zur Folge, jedoch sind diese kleiner als bei Verwendung eines zweiten AOM.

Gemäß einer ersten Ausführungsform ist vorgesehen, daß die Rückstreusignale aus dem Prüf-LWL über den nicht erregten AOM und darauffolgend einen dämpfungsärmeren direkten Weg eines unsymmetrischen Kopplers und daß der LO-Strahl über den Kreuzkoppelweg dieses Kopplers in einen zu einem optoelektronischen Wandler führenden Monomode-LWL geleitet sind.

Bei dieser Anordnung werden die Rückstreusignale auf ihrem Weg vom Laser bis zum optischen Empfänger zweimal über den AOM und dann über den dämpfungsärmeren Weg eines unsymmetrischen Kopplers (z.B. 13 dB-Faserkoppler) geführt. Deshalb ist diese Ausführungsform insbesondere bei Verfügbarkeit eines relativ dämpfungsarmen AOM mit einer Durchgangsdämpfung von beispielsweise weniger als 5 dB geeignet.

Eine zweite Ausführungsform ist dadurch gekennzeichnet, daß der vom AOM gebeugte Strahl über den dämpfungsärmeren direkten Weg eines unsymmetrischen Kopplers in den Meß-LWL geleitet ist, daß der LO-Strahl den Rückstreusignalen über den Kreuzkoppelweg des Kopplers überlagert ist und daß die Mischsignale über den nicht erregten AOM in einen zu einem optoelektronischen Wandler führenden Multimode-LWL geleitet sind.

Gegenüber der ersten Ausführungsform sind die Abschwächungen des Rückstreusignals auf dem zweifachen Weg über den Koppler größer, jedoch ist bei dieser Systemanordnung einer der Toranschlüsse, welcher zum optischen Empfänger führt, als Multimode-LWL gestaltet. Dieser kann bedeutend einfacher und genauer justiert werden, so daß bei der Strahleinkopplung in den Multimode-LWL praktisch keine Einkopplungsverluste entstehen. Dadurch werden die erhöhten Verluste im Koppler mindestens kompensiert.

Eine dritte Ausführungsform mit einem Dreitor-AOM ist dadurch gekennzeichnet, daß die gebeugten Strahlimpulse über den direkten Weg eines symmetrischen Kopplers (3 dB-Koppler) in den Prüf-LWL gesendet sind, während der LO-Strahl in umgekehrter Richtung über den anderen direkten Weg des symmetrischen Kopplers, überlagert mit den über den Kreuzkoppelweg des Kopplers zugemischten Rückstreusignalen, auf einen zu einem optoelektronischen Wandler führenden Monomode-LWL geleitet ist.

Eine gleichwertige Alternativlösung besteht darin, daß die gebeugten Strahlimpulse über einen Kreuzkoppelweg eines symmetrischen Kopplers (3 dB = Koppler) in den Prüf-LWL gesendet sind, während der LO-Strahl in umgekehrter Richtung über einen Kreuzkoppelweg des Kopplers den Rückstreusignalen zugemischt ist, welche auf einem direkten Weg des Kopplers in einen zu einem optoelektronischen Wandler führenden Monomode-LWL geleitet sind.

Diese Anordnung ist insbesondere dann vorzuziehen, wenn lediglich ein AOM mit relativ großer Durchgangsdämpfung verfügbar ist, da hierbei das Rückstreusignal auf dem Weg vom Laser bis zum optischen Empfänger nur einmal durch den AOM geleitet wird. Dabei wird allerdings gegenüber dem erstgenannten Ausführungsbeispielen ein erhöhter Verlust im 3 dB-Koppler verursacht.

Für alle Systemanordnungen gilt, daß die Abschwächung des LO-Strahls sehr viel weniger kritisch ist als die des Rückstreusignals, da seine Energie ohnehin relativ groß ist, so daß seine Abdämpfung das Signal/Rausch-Verhältnis kaum verschlechtert.

Außer den unvermeidlichen materialabhängigen Durchgangsdämpfungen ergeben sich bei einem erforderlichen AOM-Mehrtorelement Einfügungsdämpfungen, die von der Güte und geometrischen Genauigkeit der Einkopplung der optischen Strahlen abhängen. Wesentlich für ein dämpfungsarmes Mehrtorelement der eingangs genannten Art ist deshalb eine sorgfältige relative Justierung der einzelnen Bauelemente. Weiterhin sollten lange Freistrahlwege durch Luft vermieden werden, da einerseits natürlich eine kleine Baugröße des Mehrtorelements anzustreben ist, und da andererseits auf den Freistrahlwegen unvermeidlich Abstrahlverluste, insbesondere durch Strahlaufweitung, entstehen.

Die Gesamtverluste infolge des AOM-Mehrtorsystems werden gemäß einer besonders vorteilhaften Weiterbildung der Erfindung dadurch besonders niedrig, daß die beiden Toranschlüsse des AOM, in welche der LO-Strahl bzw. die zum Meß-LWL führenden Sendeimpulse geleitet sind, aus zwei parallel zueinander angeordneten Monomode-LWL bestehen, deren zum AOM gerichteten Stirnflächen mit zumindest annähernd gleichem Abstand von der zur Durchgangsachse des AOM ausgerichteten optischen Achse der Linse in der Weise angeordnet sind, daß die Strahlen zwischen den Stirnflächen der Monomode-LWL und der Linse mit zur optischen Achse der Linse parallelen Achsen und zwischen Linse und AOM im Braggwinkel α zur optischen Achse der Linse verlaufen und sich etwa in der Mitte des AOM schneiden.

Während bei bekannten Anordnungen für jeden der an einer Seite des AOM angeordneten LWL eine eigene Linse vorgesehen war, wird hier beidseitig des AOM jeweils eine einzige Linse vorgesehen. Die LWL, die Linse und der AOM sind relativ zueinander derart angeordnet, daß die Linsen nicht nur zur Aufweitung und parallelen Bündelung der Strahlen dienen, sondern auch zusätzlich als Ablenkelement wirken, welches den Strahl um den Braggwinkel gegenüber den Richtungen der Mittelachsen der aus den LWL austretenden Strahlen ablenkt.

Dabei sind die optischen Achsen der Linse und die Durchgangsachse des AOM identisch, ein Differenzwinkel braucht nicht einjustiert zu werden. Die LWL sind parallel zueinander angeordnet. Eine Parallellage mit vorgegebenen Abstand ist bedeutend einfacher zu verwirklichen als eine genaue Winkelanordnung der LWL.

Der Abstand der zueinander parallelen LWL kann sehr gering, nämlich kleiner als das dreifache ihres Außendurchmessers sein, so daß dann die Linsen und die Stirnflächen der LWL sehr nahe zum AOM angeordnet sind, wobei vorzugsweise vorgesehen ist, daß die LWL mit ihrer freigelegten Mantelschicht nahezu unmittelbar aneinanderliegen.

Wenn der Abstand der Mittelachsen der nebeneinanderliegenden LWL zumindest mit guter Näherung den Wert d = f 2 hat (f = Brennweite der Linse), verlaufen die Strahlachsen zwischen Linse und dem LWL parallel zur optischen Achse der Linse und zwischen Linse und AOM um den Braggwinkel geneigt zur Richtung der durch den AOM geleiteten akustischen Wellenfront.

Wenn die Brennweite f der Linse den Wert $w_{max} \cdot \pi \cdot w_o / \lambda$ nicht wesentlich überschreitet, ($w_o$ = Feldweite im Monomode-LWL, $\lambda$ = Wellenlänge des Lichts, $2 w_{max}$ = Durchmesser der aktiven Öffnung des AOM), ist gewährleistet, daß die Strahlweiten der den AOM durchsetzenden parallelen Strahlen die aktive Öffnung des AOM nicht überschreiten.

Grundsätzlich wäre es denkbar, als Linse eine Selfoc-Linse zu verwenden. Allerdings sind derzeit keine Selfoc-Linsen mit den für die Erfindung benötigten Brennweiten verfügbar. Mit Plankovex- oder Bikonvexlinsen konnte die erfindungsgemäße Lösung jedoch hervorragend realisiert werden.

Bevorzugt wird eine freistrahloptische Anordnung, bei welcher die Linse und die LWL derart relativ zueinander an einem Tragkörper befestigt sind, daß bei der Herstellung des AOM-Mehrtorelements eine gegenseitige Justage der Abstände in drei zueinander senkrechten Koordinatenrichtungen x, y und z möglich ist. Dabei ist zur Erzielung möglichst geringer Dämpfungen die Möglichkeit zur genauen Justierung gegeben, welche bei einer Ausführung ohne Luftwege (z.B. integrierte Optik) nicht möglich wäre.

Der Justieraufwand wird dadurch verringert, daß die Abstände in den Koordinatenrichtungen x, y und z unabhängig voneinander selektiv justierbar und fixierbar sowie Mittel vorgesehen sind, welche bei der Justierung in einer Koordinatenrichtung die Beibehaltung der Justierlage in den anderen Koordinatenrichtungen gewährleisten. Eine Einjustierung in einer Koordinatenrichtung kann dann beim Justiervorgang für die anderen Koordinatenrichtungen nicht verstellt werden.

Insbesondere bei einem Viertor-AOM-Element ist es vorteilhaft, daß auch die Toranschlüsse an der Seite des AOM, wo der Laserstrahl eingekoppelt wird, wie vorbeschrieben ausgeführt sind.

Bei Verwendung von Lasern, welche empfindlich auf Rückstreureflexe reagieren (Instabilität), ist es vorteilhaft, daß der Sendestrahl des Lasers über einen optischen Isolator geführt ist.

Da von einem optischen Empfänger (z.B. Photodiode) in den Laser reflektierte Strahlung bei den oben erstgenannten beiden Ausführungsarten der Erfindung durch den unsymmetrischen Koppler stark abgeschwächt wird, kann man dort meist auf die Verwendung eines optischen Isolators verzichten, sofern die Entstehung von störenden Reflexen anderer System-Bauteile ausreichend verhindert ist.

Heterodyn-Empfang ist ein polarisationsempfindliches Detektionsverfahren. Für einen optimalen Empfang müssen die Polarisationen von Signallicht und Lokaloszillatorlicht übereinstimmen; für zueinander senkrechte Polarisationen wird das Mischprodukt zu null.

Das rückgestreute Licht aus jedem Längenelement einer Faser hat unterschiedliche, nicht vorhersehbare und darüber hinaus zeitlich i.a. langsam veränderliche Polarisationszustände (SOP's). Daher kommt es bei fester Lokaloszillatorpolarisation zu einem Signalfading. Um das zu verhindern, ist es vorteilhaft, daß der LO-Strahl über einen Polarisations-Verwürfler geleitet ist.

Dabei wurden mittels zweier um 45° gegeneinander verdrehter Magnetanordnungen Wechsel-Kräfte auf einen Abschnitt einer Monomode-Faser aufgebracht. Betrieben wurden die Magnete mit dreieckförmigen Strömen unterschiedlicher Frequenzen (z.B. 17 und 21 Hz) und mit solchen Amplituden, daß Retardierungen von 0 bis $2 \pi$ im LWL in beiden Einwirkungsrichtungen verursacht werden. Damit wurde erreicht, daß die durch Polarisationseffekte zu erwartende Schwankung auf den Rückstreukurven nur etwa 0,1 dB betragen kann.

Für ein Rückstreumeßgerät gemäß der Erfindung ist eine Linienbreite des Lasers von 1 MHz vorteilhaft, um die Anforderungen bzgl. der Bandbreite des durch Überlagerung von Lokaloszillator und frequenzversetztem Licht entstehenden Zwischenfrequenzspektrums zu erfüllen. Als für die Erfindung diesbezüglich vorteilhaft haben sich DFB-Laser (DFB = distributed feed back) erwiesen. Eine besonders einfache und sehr wirksame Stabilisierung des Lasers wurde dadurch erreicht, daß der Laserstrahl über den dämpfungsärmeren (insbesondere 1,5 dB) direkten Weg eines unsymmetrischen Kopplers geführt ist, an dessen Kreuzkoppelanschluß ein Abschnitt eines Monomode-LWL-Abschnitts mit reflektierender Endfläche angeschlossen ist, so daß ein geringer Teil der Sendeenergie in den Laser zu seiner Stabilisierung zurückgeführt ist.

Bei einer ausgeführten Anordnung wurde an einem DFB-Laser mit Singlemode-Faserpigtail ein Singlemode-Viertor-Faserkoppler angespleißt. Der eine Zweig diente als Auskoppelarm für das schmalbandige Laserlicht, während der andere Arm als Stabilisierungszweig benutzt wurde. Der externe Faserresonator wird durch das Laserpigtail, den Koppler mit seinen Faseranschlüssen und den reflektierenden Schnitt am Faserende gebildet. Der Faserabschnitt dient dabei als End"spiegel", sorgt bei angepaßter Dimensionierung des Kopplers für die Linienbreiteneinengung des DFB-Lasers und definiert die Resonatorlänge. Der Reflektionsgrad des Schnitts ergibt sich in der Praxis zu ca. 2% (-17 dB), da durch unvermeidbare Winkelfehler beim Schneiden der theoretische Wert von ca. 4% (-14 dB) meist nicht erreicht wird. Um den optimalen Reflektionsgrad am Laser von ca. 0,02% (-37 dB) zu erhalten, wurde ein Koppler mit einem Kopplungsgrad von 10% gewählt.

Zur Unterdrückung störender Reflektionen aus dem Auskoppelzweig wurde dieses Faserende unter einem Winkel von ca. 10° anpoliert. Die Polarisationsebene des in den Laser reflektierten Strahls blieb wegen Verwendung kurzer Faserstücke zwischen Laser und Koppler bzw. Koppler und Ausgang gut erhalten. Derart wurde eine Laser-Linienbreite von 100 KHz ohne wesentliche Einbuße an verfügbarer Ausgangsnutzleistung erreicht.

Da Sendelaser üblicher Bauart, insbesondere auch DFB-Laser, bei Reflexen aus einem Rückstreumeßgerät ihre Schmalbandigkeit verlieren können, kann es gegebenenfalls sogar zusätzlich zur Einschaltung eines optischen Isolators vorteilhaft sein, weitere Maßnahmen zur Verhinderung von Reflexionen vorzusehen, da bekanntlich ein Isolator nicht vollständig die Rückstrahlung von Reflexen abblockt. Deshalb wird gemäß einer bevorzugten Lösung vorgesehen, daß die Stirnflächen der LWL in einem Winkel zur Achse dieser LWL angeschliffen sind, welcher geringfügig, insbesondere um etwa $\beta = 6°$, von einem rechten Winkel abweicht, und daß die Achsen der LWL in einem solchen Winkel, insbesondere $\gamma = 2,7°$, zur Achse der Linse angeordnet sind, daß die Achsen der aus den Stirnflächen der LWL austretenden Strahlen parallel zur optischen Achse der Linse verlaufen.

Diese Maßnahme ist insbesondere dann empfehlenswert, wenn eine der eingangs genannten Ausführungsformen der Erfindung, welche mit einem Viertor-AOM aufgebaut sind, verwendet werden sollen. Dann kann man sogar auf die Einschaltung eines Isolators verzichten.

Sämtliche Maßnahmen zur Abblockung von Fresnel-Reflexen in den Sendelaser können natürlich entfallen, wenn ein Laser verwendet wird, welcher an sich bereits genügend unempfindlich gegen Rückstrahlung ist, ohne dadurch seine Stabilität und Schmalbandigkeit zu verlieren.

Die Erfindung wird anhand der Beschreibung von in der Zeichnung dargestellten vorteilhaften Ausführungsbeispielen näher erläutert.

Fig. 1 zeigt schematisch die Anordnung der wesentlichen optischen Bauelemente für einen ersten erfindungsgemäßen OTDR-Aufbau.

Fig. 2 zeigt schematisch die Anordnung der wesentlichen optischen Bauelemente für einen zweiten erfindungsgemäßen OTDR-Aufbau.

Fig. 3 zeigt die Anordnung der Bauelemente eines AOM, welcher für einen dritten erfindungsgemäßen OTRD-Aufbau geeignet ist.

Fig. 4 zeigt schematisch die Anordnung der optischen Bauelemente und der zugehörigen elektronischen Blockschaltungen für einen dritten erfindungsgemäßen OTDR-Aufbau.

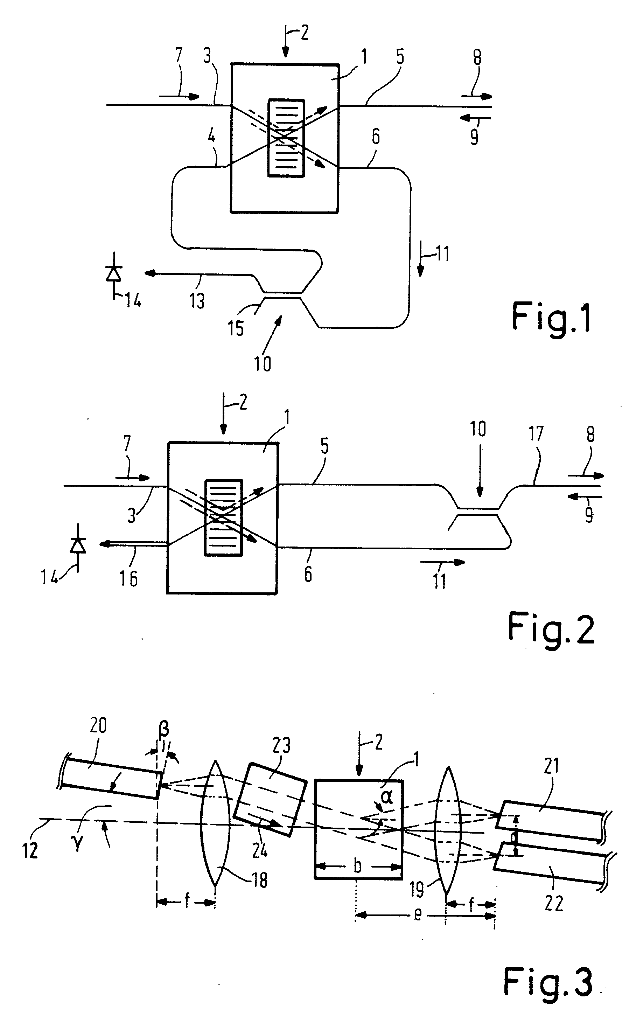

In Fig. 1 ist ein AOM 1 angedeutet, durch welchen in Richtung des Pfeils 2 eine akustische Welle leitbar ist. Über Toranschlüsse bildende Monomode-LWL 3,4,5 und 6 und über nicht dargestellte Linsen sind optische Strahlen durch den AOM 1 leitbar. Der über den LWL 3 in Pfeilrichtung 7 ankommende Laser-Sendestrahl gelangt bei nicht erregtem AOM 1 auf direktem Wege als LO-Strahl in den LWL 6. Bei impulsweise akustisch erregtem AOM 1 wird ein frequenzversetzter Meßimpuls in Pfeilrichtung über den LWL 5 in einen an diesen anzuschließenden Prüf-Monomode-LWL gesendet. Die je nach Rückstreuort Zeit verzögert in Pfeilrichtung 9 zurückkommenden Rückstreusignale gelangen über den nicht mehr akustisch erregten AOM 1 in den LWL 4 und werden über einen unsymmetrischen Faserkoppler 10 mit dem LO-Strahl (Pfeilrichtung 11) überlagert. Das entstehende Mischsignal ist über den Monomode-LWL 13 auf die optisch sensible Fläche einer Photodiode 14 gerichtet.

Der Koppler 10 ist derart dimensioniert, daß über seinen direkten Weg vom LWL 4 zum LWL 13 ca. 90% der Energie der Rückstreuimpulse (Pfeilrichtung 9) übertragen wird. Nur ca. 10% der Rückstreuenergie geht verloren durch Überkopplung in den nicht genutzten Anschluß 15 des Kopplers 10. Umgekehrt wird 10 % der LO-Energie aus dem LWL 11 in den LWL 13 übertragen.

Von der Photodiode 14 in den LWL 13 zurückgestreute Reflexe werden auf dem Weg in den LWL 11 durch den Koppler ebenfalls auf etwa 10% ihres Wertes reduziert, so daß nur ein stark abgeschwächter Anteil der Reflexe über den AOM 1 und den LWL 3 in den nicht dargestellten Laser gelangen kann. Deshalb ist es möglich, auf einen optischen Isolator zu verzichten, falls anhand Fig. 3 beschriebene Maßnahmen zur Reflexminderung der Toranschlüsse des AOM 1 vorgesehen werden. Die Systemanordnung nach Fig. 1 ist bei Verfügbarkeit eines besonders dämpfungsarmen AOM vorteilhaft.

Bei dem Systemaufbau nach Fig. 2 sind der AOM 2 und der unsymmetrische Koppler 10 in geänderter Weise einander zugeordnet. Ferner ist statt eines Monomode-LWL 4 ein Multimode-LWL 16 als vierter Toranschluß des AOM 1 vorgesehen.

An den Monomode-LWL 17 ist der Prüf-LWL anzuschließen. Das in Pfeilrichtung 9 ankommende Rückstreusignal gelangt über den direkten dämpfungsärmeren Weg (90%) des Kopplers 10 und den nicht erregten AOM 1 in den Multimode-LWL 16 und von dort auf die Photodiode 14. Vorher wird ca. 10% des über den LWL 6 in Pfeilrichtung 11 geführten LO-Strahls im Koppler 10 zugemischt. Gegenüber der Ausführung nach Fig.1 bewirkt der Koppler eine zweifache Abschwächung der Rückstreuenergie, weil der Sendeimpuls und sein als Rückstreusignal zurückgestreuter Anteil jeweils um ca.10% geschwächt werden. Andererseits ist die Ausrichtung des Multimode-LWL 16 auf maximale Erfassung des aus dem AOM 1 austretenden Mischsignals sehr viel einfacher und wirksamer möglich, so daß dort praktisch keine Einfügungsdämpfungen entstehen.

Die Lösung nach Fig. 2 wird man vorziehen, wenn einerseits ein AOM geringer Durchgangsdämpfung verfügbar ist und ein verringerter Justieraufwand angestrebt wird. Auch für diese Lösung kann in gleicher Weise wie bei der Anordnung nach Fig. 1 unter günstigen Voraussetzungen auf einen optischen Isolator verzichtet werden.

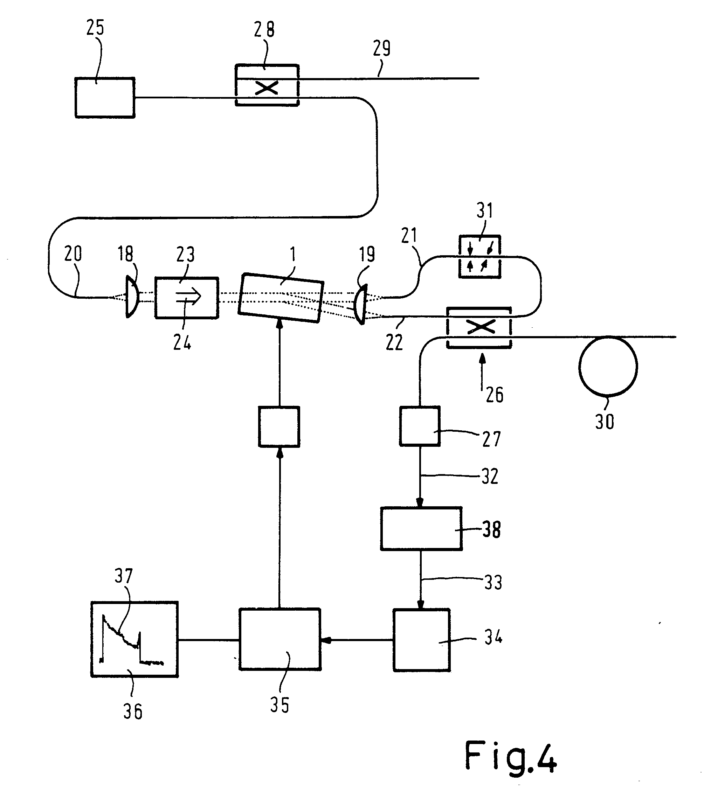

In Fig. 3 ist ein Dreitor-AOM mit besonders dämpfungsarmen, reflexionsarmen und einfach justierbarem Aufbau schematisch dargestellt, wie er für ein Systemaufbau nach Fig. 4 besonders vorteilhaft geeignet ist.

Das in Fig. 3 schematisch dargestellte System eines Dreitorelements besteht aus dem AOM 1, gleichartigen Linsen 18 und 19 mit gleicher Brennweite f sowie die Toranschlüsse bildenden Monomode-LWL 20, 21 und 22. Die optischen Achsen der Linsen 18 und 19 und die Durchgangsachse des AOM 1 fallen mit der Mittellinie 12 zusammen. Die Längsachsen der LWL 20,21 und 22 sind parallel zueinander in einer gemeinsamen Ebene angeordnet, welche in Richtung 2 einer auf den AOM 1 leitbaren akustischen Welle durch die Mittellinie 12 verläuft.

Der Abstand 1 von der Mitte des AOM 1 zu den Stirnflächen der LWL 21 und 22 sollte nach Möglichkeit den Wert $1 = 2 f + (n-1)^{\cdot}b/2 n$ betragen (n = Brechungsindex des AOM-Materials, b = Breite des AOM), jedoch ist eine sehr präzise Einjustierung dieses Wertes insbesondere dann nicht erforderlich, wenn der Durchmesser der aktiven Öffnung des AOM 1 größer als die Feldweite der zwischen der Linse 19 und AOM 1 verlaufenden parallelen aufgeweiteten Strahlen ist, welche sich in der Mitte des AOM 1 schneiden und jeweils im übertrieben groß gezeichneten Braggwinkel $\alpha$ zur Mittelachse 12 gerichtet sind. Eine solche Richtung ergibt sich dann, wenn der Abstand der Mittelachsen der LWL 21 und 22 zumindest annähernd $d = f^{\cdot}2\alpha$ beträgt.

Die Achsen der LWL 20 bis 22 liegen in einer gemeinsamen Ebene, die durch die Mittelachse 12 und die Richtung 2 der akustischen Welle gegeben ist. Da der optische Isolator 23 zwischen Linse 18 und AOM 1 eingefügt ist, ist der Abstand zwischen der Stirnfläche des LWL 20 und der Mitte des AOM 1 größer als der Wert 1. Die Stirnflächen der LWL 21 und 22 sind in gleichem Abstand zur Mittellienie 12 angeordnet. Für die Stirnfläche des LWL 20 ergibt sich dagegen wegen des längeren Strahlweges ein vergrößerter Abstand von der Mittellinie 12. Dieser ist allerdings in Fig. 2 stark übertrieben gezeichnet. Der Braggwinkel $\alpha$ ist in Wirklichkeit sehr viel kleiner. Ein Unterschied der relativen Lage der LWL 22 und 20 läßt sich mit bloßem Auge kaum erkennen.

Wegen des Schräganschliffs der Stirnflächen der LWL 20 bis 22 um den Winkel $\beta = 6° + 30\%$ werden Fresnel-Reflexionen weitgehend vermieden, ohne daß nennenswerte zusätzliche Einfügungsdämpfungen entstehen. Die Schräglage der Achsen der LWL 20 bis 22 im Winkel $\gamma = 2,7° + 30\%$ zur Mittelachse 12 ist erforderlich, damit die aus ihren Stirnflächen austretenden Strahlen parallelachsig zur optischen Achse der Linse bzw. zur Mittelachse 12 auf die Linsen 18 bzw. 19 auftreffen. Dadurch ist gewährleistet, daß die parallel aufgeweiteten Strahlen jeweils im Braggwinkel $\alpha$ auf die Mitte des AOM gerichtet verlaufen.

Der Isolator 23 ist derart ausgerichtet, daß die Polarisationsebene des über den LWL 20 gerichteten Laserstrahls nahezu unbehindert in Richtung des Pfeils 24 hindurchgelassen wird. Wegen der nichtreziproken Drehung der Polarisationsebene des Lichts beim Durchgang durch den Isolator 23 kann in Gegenrichtung praktisch kein reflektiertes Licht zurück zum Laser gelangen. Da das Licht auf den Wegen durch das Dreitorelement nach Fig. 3 nur geringe Dämpfungen erfährt, war die Reichweite des mit dieser Anordnung ausgerüsteten Heterodyn-OTDR nach Fig. 4 sehr groß, d.h. auch das Dämpfungsverhalten sehr weit entfernt liegender Längenabschnitte des Prüf-LWL konnte zuverlässig gemessen werden.

Zu diesem Erfolg trug wesentlich die genaue Justierung der einzelnen Bauelemente relativ zueinander bei. Dabei zeigte sich, daß bei einer Anordnung nach Fig. 3 eine Feinjustierung mit anzustrebenden Genauigkeiten von Bruchteilen eines µm mit einfachen konstruktiven Mitteln und mit relativ geringem Justieraufwand möglich ist.

Da der Abstand zwischen den LWL 21 und 22 kleiner als das dreifache des LWL-Durchmessers gewählt werden kann, ergeben sich sehr kurze Baulängen für die AOM-Anordnung. Die in den Fig. 1 und 2 nur prinzipartig dargestellten AOM 1 wurden deshalb konstruktiv ähnlich der Lösung nach Fig. 3 aufgebaut, allerdings ohne Isolator 23.

Das System nach Fig. 4 bedeutet einen vorteilhaften Kompromiß bei Verwendung verfügbarer Bauelemente (DFB-Laser, AOM). Der AOM 1 mit seinen Toranschlüssen ist einfach aufzubauen und genau verlustarm zu justieren. Das Licht des durch den über den Koppler 28 reflektierenden Monomode-LWL 29 stabilisierten 1300 nm - Dauerstrichlasers 25 (Hitachi HL 1341 A; Linienbreite ca. 100 kHz. Leistung ca. 1 mW) gelangt im LO-Zweig durch den AOM 1 und den 3 dB-Faserkoppler 26 zu dem optischen Detektor 27. Zur Erzeugung des frequenzversetzten Lichtpulses in der zu untersuchenden Faser dient der AOM 1. Er wird für die Pulsdauer mit einem Hochfrequenzsignal (Frequenz f = 80 MHz) angesteuert. Durch die damit erzeugte, sich bewegende Schallwelle wird das Laserlicht in die erste Ordnung gebeugt (Braggwinkel) und gleichzeitig um die Frequenz f (Dopplereffekt) verschoben. Durch den Viertorkoppler 26 gelangt der Lichtpuls in den Prüf-LWL 30. Das rückgestreute Signal (Rayleigh-Streuung) läuft wiederum durch den Koppler 26, mischt sich mit dem LO-Signal und gelangt schließlich zum Detektor 27.

Gegenüber der in der Fig. 4 gezeichneten Anschlußart des symmetrischen Kopplers 26 können bei gleich guter Wirkung die Anschlüsse auf seiner rechten oder linken Seite miteinander vertauscht werden.

Der mit drei Toranschlüssen betriebene AOM 1 wird als schneller optischer Schalter mit gleichzeitigem Frequenzversatz eingesetzt und bietet mit dem Viertor-Faserkoppler 26 die kleinstmöglichen optischen Verluste, da das Licht den AOM 1 nur einmal passieren muß. Das rückgestreute Signal wird durch den symmetrischen 3 dB-Koppler nur um ca. -3,5 dB gedämpft.

Weiterhin erlaubt der gemäß Fig. 3 ausgebildete Dreitor-AOM 1 den Einsatz eines optischen Isolators 23 zur Unterdrückung von Reflexen aus dem System, die die Laserstabilität beeinträchtigen würden. Zur Reflexminimierung wurden weiterhin schräg angeschliffene LWL 20 bis 22 gemäß Fig. 3 eingesetzt. Damit wurde ein kompakter AOM-Aufbau realisiert, der sich relativ einfach justieren läßt, unempfindlich gegen mechanische und thermische Belastungen ist, und der eine kleine optische Durchgangsdämpfung (ca. -6 dB mit Isolator) aufweist. Am Eingang der Testfaser stehen ca. -10 dBm (100 μW) Laserleistung zur Verfügung.

Die geringe Baugröße des AOM-Systems, welches im wesentlichen aus den Bauelementen Isolator 23, Linsen 18 und 19 und beidseitig des AOM in Führungsblöcken genau ausgerichteten LWL 20 bzw. 21, besteht, war gegenüber herkömmlichen Anordnungen erheblich kleiner. Die Positionen der Brennpunkte wurden bei kleinem Abstand zwischen AOM und Linse so gewählt, daß sie bei der Linsenbrennweite von 4 mm und dem AOM-Ablenkwinkel von 1,6 ° nur 125 μm auseinander liegen. Die LWL 21 und 22 (9 μm Kerndurchmesser, 125 μm Außendurchmesser) lagen direkt aneinander. Die fokussierten Laserstrahlen wurden direkt in die LWL-Kerne gerichtet.

Im LO-Zweig ist zwischen AOM und Koppler ein Polarisationsverwürfler 31 eingefügt, womit sich Polarisationsfadingeffekte schneller herausmitteln lassen.

Die mit dem Lokaloszillatorlicht überlagerten optischen Signale werden von einem üblichen 100 MHz-PINFET-Detektor 27 mit LWL-Anschluß empfangen. Zur Aufbereitung der resultierenden elektrischen Signale 32 folgt zunächst ein auf die Zwischenfrequenz von 80 MHz abgestimmtes Filter mit einer dem trägerfrequenten Rückstreusignal entsprechenden Bandbreite. Damit werden störende Frequenzanteile von der nachfolgenden Verstärkerstufe ferngehalten, um mögliche Intermodulationseffekte zu vermeiden.

Anschließend erfolgt die Demodulation bzw. Gleichrichtung mittels einer Diode. Diese Demodulatordiode ("2.Detektor") wird durch einen entsprechenden Vorstrom im quadratischen Teil ihrer Kennlinie betrieben. Damit erzielt man sowohl eine hohe Empfindlichkeit als auch- bei nicht zu hoher ZF-Signalamplitude, also gut angepaßter ZF-Verstärkung -eine unverzerrte elektrische Abbildung des optischen Rückstreusignals über einen weiten Dynamikbereich. Die letztgenannten Funktionselemente sind in der Blockschaltung 38 enthalten.

Nach einer Tiefpaßfilterung mit ca 2 MHz Eckfrequenz steht ein Spannungspegel 33 zur Verfügung, der proportional zur Rückstreuleistung ist (Einhüllende des quadrierten ZF-Signals). Er wird nach jedem Laserimpuls mit einem 10-bit-Analog-Digital-Wandler 34 im zeitlichen Abstand von 1 μ sec (entsprechend 100 m Ortsauflösung) abgetastet und digital abgespeichert.

Zur weiteren Steigerung der Reichweite des Reflektometers und zur Glättung von Interferenz-(Fading-) Effekten können viele nacheinander gemessene Signalkurven gemittelt werden.

Dazu wurde eine schnelle Echtzeit-Mittelungselektronik (im Blockschaltelement 34) vorgesehen. Mit ihr können bis zu 4096 zeitlich nach dem Laserpuls aufeinander folgende Meßwerte abgespeichert werden. Bei dem Abtastabstand von 1 μsec entspricht dies einer maximalen Länge der Faserstrecke von ca. 400 km. Zur Mittelung können bis zu 1000000 solcher Messungen in Echtzeit aufsummiert werden, wobei jeder der bis zu 4096 Einzelmeßwerte in seinem jeweiligen Speicherplatz (Kanal) zur Summe der vorhergehenden Ergebnisse addiert wird. Bei einer Meßstreckenlänge von 50 km (500 Kanäle von je 100 m) kann der AOM alle 500 μsec einen frequenzversetzten Laserpuls erzeugen; somit können 2000 Mittelungen pro Sekunde durchgeführt werden, wobei insgesamt 1000000 Einzelmessungen erfolgen. Der Gewinn im meßbaren Einwegdynamikbereich des Reflektometers ergibt sich zu 2,5 dB·log(m) (m = Anzahl der Mittelungen), z.B. erhält man bei 10000 Meßzyklen (5 sec Gesamtmeßzeit bei 50 km Streckenlänge) eine Verbesserung von 10 dB im Signal/Rausch-Verhältnis. Die Steuerung der Abläufe im OTDR und die Auswertung der gemessenen Rückstreusignale erfolgt mit einem Computer 35. Aus der Wahl der maximal zu vermessenden Distanz ergibt sich die Kanalanzahl für die Mittelungselektronik. Die grafische Darstellung der Meßergebnisse erfolgt auf dem Bildschirm 36 des Rechners, der die gemittelten Daten nochmals aufaddiert, wobei die Zahl der möglichen Mittelungen und damit das Signal/Rausch-Verhältnis weiter gesteigert werden kann. Aus der Zeitspanne zwischen zwei Auswertungen und der Kanalanzahl ergibt sich die Anzahl der von der Elektronik durchzuführenden Meßzyklen. Während der Auswertung und grafischen Darstellung der letzten Messungen führt die Elektronik bereits die nächsten Mittelungen durch, so daß sich laufend verbesserte Meßkurven 37 ergeben, welche den bekannten charakteristischen Verlauf aufweisen und Rückschlüsse über das Dämpfungsverhalten und die Qualität des Meß-LWL ermöglichen.

## Ansprüche

1. Optisches Heterodyn-Zeitbereichsreflektometer (OTDR) zur Bestimmung des Dämpfungsverhaltens eines Monomode-Lichtwellenleiters (Prüf-LWL) durch Messung der rückgestreuten Anteile von in diesen LWL gesendeten Lichtimpulsen, mit einem akustooptischen Modulator (AOM), durch welchen der Sendestrahl eines Lasers bei impulsweiser akustischer Erregung des AOM mit um die akustische Frequenz veränderter Lichtfrequenz in den Prüf-LWL abgelenkt wird, während der bei Nichterregung des AOM durch diesen dringende Laserstrahl als Lokaloszillatorstrahl (LO) dem aus dem Prüf-LWL zurückgestreuten Lichtimpulsen überlagert wird,
dadurch gekennzeichnet, daß die Überlagerung in einem passiven Koppler, insbesondere einem Faserkoppler (10,26) erfolgt.

2. Anordnung nach Anspruch 1,
dadurch gekennzeichnet, daß die Rückstreusignale aus dem Prüf-LWL über den nicht erregten AOM (1) und darauffolgend einen dämpfungsärmeren direkten Weg eines unsymmetrischen Kopplers (10) und daß der LO-Strahl (11) über den Kreuzkoppelweg dieses Kopplers (10) in einen zu einem optoelektronischen Wandler (14) führenden Monomode-LWL (13) geleitet sind.

3. Anordnung nach Anspruch 1 oder 2,
dadurch gekennzeichnet, daß der vom AOM (1) gebeugte Strahl (8) über den dämpfungsärmeren direkten Weg eines unsymmetrischen Kopplers (10) in den Prüf-LWL geleitet ist, daß der LO-Strahl (11) den Rückstreusignalen (9) über den Kreuzkoppelweg des Kopplers (10) überlagert ist und daß die Mischsignale über den nicht erregten AOM (1) in einen zu einem optoelektronischen Wandler (14) führenden Multimode-LWL (16) geleitet sind.

4. Anordnung nach Anspruch 1,
dadurch gekennzeichnet, daß die gebeugten Strahlimpulse über den direkten Weg eines symmetrischen Kopplers (26) (3 dB = Koppler) in den Prüf-LWL (30) gesendet sind, während der LO-Strahl in umgekehrter Richtung über den anderen direkten Weg des symmetrischen Kopplers (26), überlagert mit den über den Kreuzkoppelweg des Kopplers (26) zugemischten Rückstreusignalen, auf einen zu einem optoelektronischen Wandler (27) führenden Monomode-LWL geleitet ist.

5. Anordnung nach einem der Ansprüche 1 bis 4,
dadurch gekennzeichnet, daß die gebeugten Strahlimpulse über einen Kreuzkoppelweg eines smmetrischen Kopplers (26) (3 dB = Koppler) in den Prüf-LWL (30) gesendet sind, während der LO-Strahl in umgekehrter Richtung über einen Kreuzkoppelweg des Kopplers (26) den Rückstreusignalen zugemischt ist, welche auf einem direkten Weg des Kopplers (26) in einen zu einem optoelektronischen Wandler (27) führenden Monomode-LWL geleitet sind.

6. Anordnung nach einem der Ansprüche 1 bis 5,
dadurch gekennzeichnet, daß die beiden Toranschlüsse des AOM (1), in welche der LO-Strahl bzw. die zum Prüf-LWL (30) führenden Sendeimpulse geleitet sind, aus zwei parallel zueinander angeordneten Monomode-LWL (21,22) bestehen, deren zum AOM (1) gerichteten Stirnflächen mit zumindest annähernd gleichem Abstand von der zur Durchgangs-achse (12) des AOM ausgerichteten optischen Achse der Linse (19) in der Weise angeordnet sind, daß die Strahlen zwischen den Stirnflächen der Monomode-LWL (21,22) und der Linse (19) mit zur optischen Achse der Linse (19) parallelen Achsen und zwischen Linse (19) und AOM (1) im Braggwinkel zur optischen Achse der Linse (19) verlaufen und sich etwa in der Mitte des AOM (1) schneiden.

7. Anordnung nach Anspruch 6,
dadurch gekennzeichnet, daß auch die Toranschlüsse an der Seite des AOM, wo der Laserstrahl eingekoppelt wird, entsprechend Anspruch 5 ausgebildet sind.

8. Anordnung nach einem der Ansprüche 1 bis 7,
dadurch gekennzeichnet, daß der Sendestrahl des Lasers (25) über einen optischen Isolator (23) geführt ist.

9. Anordnung nach Anspruch 8,
dadurch gekennzeichnet, daß der optische Isolator (23) im Weg des Sendestrahls zwischen Linse (18) und AOM (1) angeordnet ist.

10. Anordnung nach einem der Ansprüche 1 bis 9,
dadurch gekennzeichnet, daß der LO-Strahl über einen Polarisations-Verwürfler (31) geleitet ist.

11. Anordnung nach einem der Ansprüche 1 bis 10,
dadurch gekennzeichnet, daß der Laser (25) ein DFB-(distributed feed back) Laser ist.

12. Anordnung nach einem der Ansprüche 1 bis 11,
dadurch gekennzeichnet, daß der Laserstrahl über den dämpfungsärmeren (insbesondere 1,5 dB) direkten Weg eines unsymmetrischen Kopplers (28) geführt ist, an dessen Kreuzkoppelanschluß ein Abschnitt (29) eines Monomode-LWL-Abschnitts mit reflektierender Endfläche angeschlossen ist, so daß ein geringer Teil der Sendeenergie in den Laser (25) zur seiner Stabilisierung zurückgeführt ist.

13. Anordnung nach einem der Ansprüche 1 bis 12,
dadurch gekennzeichnet, daß die Stirnflächen der Anschlußtore des AOM bildenden LWL (20,21,22) in einem Winkel zu ihrer Achse angeschliffen sind, welcher geringfügig, insbesondere um etwa $\beta = 6°$, von einem rechten Winkel abweicht, und daß die Achsen der LWL in einem solchen Winkel, insbesondere $\gamma = 2,7°$ zur Achse der Linse angeordnet sind, daß die Achsen der aus den Stirnflächen der LWL (20,21,22) austretenden Strahlen parallel zur optischen Achse der Linse verlaufen.

Fig.1

Fig.2

Fig.3

1-II-PHD 87-218

Fig.4

**Europäisches Patentamt**

# EUROPÄISCHER RECHERCHENBERICHT

Nummer der Anmeldung

EP 88 20 2438

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 506 884 (PHILIPS PATENTVERWALTUNG GMBH) * Seiten 7-9 * | 1-6 | G 01 M 11/00 |
| X | GB-A-2 178 554 (STC PLC) * Seite 1, Zeilen 67 - 90 * | 1 | |
| A | EP-A-0 190 859 (INTERNATIONAL STANDARD ELECTRIC CORP.) * Ansprüche 1-7 * | 4-6 | |
| A | PATENT ABSTRACTS OF JAPAN Band 7, no. 2 (P-166)(1147); & JP - A - 57 163 217 (NIPPON DENKI K.K.) 07-10-1982 | 1,4,5 | |
| A | PATENT ABSTRACTS OF JAPAN Band 7, Nr. 270 (P-240)(1415); & JP - A - 58 149 025 (NIPPON DENKI K.K.) 05-09-1983 | 1 | |
| A | PATENT ABSTRACTS OF JAPAN Band 10, Nr. 183 (P-472)(2239); & JP - A - 61 29731 (AGENCY OF IND SCIENCE & TECHNOL) 10-02-1986 | 1 | **RECHERCHIERTE SACHGEBIETE (Int. Cl.4)** G 01 M 11/00 |
| A | PATENT ABSTRACTS OF JAPAN Band 10, Nr. 111 (P-451)(2168); & JP - A - 60 242 435 (NIPPON DENKI K.K.) 02-12-1985 | 2 | |

Der vorliegende Recherchenbericht wurde für alle Patentansprüche erstellt

| Recherchenort | Abschlußdatum der Recherche | Prüfer |
|---|---|---|
| BERLIN | 30-01-1989 | DIETRICH A. |